(19) Europäisches Patentamt
European Patent Office
Office européen des brevets

(11) Veröffentlichungsnummer: **0 288 434 B1**

(12) **EUROPÄISCHE PATENTSCHRIFT**

(45) Veröffentlichungstag der Patentschrift: **06.02.91**

(51) Int. Cl.$^5$: **C 09 B 67/26** // C09B67/54, D06L3/12

(21) Anmeldenummer: **88810229.0**

(22) Anmeldetag: **06.04.88**

# (54) Verfahren zur Herstellung konzentrierter wässriger Farbstoffzubereitungen.

(30) Priorität: **16.04.87 CH 1506/87**

(43) Veröffentlichungstag der Anmeldung:
**26.10.88 Patentblatt 88/43**

(45) Bekanntmachung des Hinweises auf die Patenterteilung:
**06.02.91 Patentblatt 91/06**

(84) Benannte Vertragsstaaten:
**BE CH DE ES FR GB IT LI**

(56) Entgegenhaltungen:
**EP-A-0 049 802**
**FR-A-2 416 926**
**GB-A-1 441 585**

(73) Patentinhaber: **CIBA-GEIGY AG**
**Klybeckstrasse 141**
**CH-4002 Basel (CH)**

(72) Erfinder: **Galli, Roberto, Dr.**
**Eremitagestrasse 3**
**CH-4153 Reinach (CH)**
Erfinder: **Kvita, Petr, Dr.**
**Tschäpperliring 10**
**CH-4153 Reinach (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft ein Verfahren zur Herstellung konzentrierter wässriger Farbstoffzubereitungen von anionischen Farbstoffen, indem man Rohfarbstofflösungen oder -suspensionen, in denen die Farbstoffe als relativ schwerlösliche Farbstoffsalze vorliegen, mittels eines Membrantrennprozesses von den ebenfalls vorhandenen anorganischen Salzen weitgehend befreit, durch Zusatz von Natriumsalzen leichter lösliche Farbstoffsalze herstellt und die Farbstofflösungen aufkonzentriert.

Aus der DE—A—2805891 ist bereits ein Verfahren zur Herstellung konzentrierter wässriger Farbstoff- oder Aufhellerlösungen bekannt, gemäss dem einerseits anorganische Salze mittels eines Membrantrennverfahrens aus den entsprechenden Syntheselösungen entfernt werden und andererseits die als Natrium-, Kalium- oder Erdalkalimetallsalze vorliegenden Farbstoffe bzw. Aufheller in Lithium- oder Ammoniumsalze übergeführt werden.

Es wurde nun gefunden, dass man stabile, konzentrierte, wässrige Farbstoffzubereitungen von anionischen Farbstoffen, insbesondere von anionischen Reaktivfarbstoffen erhalten kann, wenn man Rohfarbstofflösungen oder -suspensionen dieser Farbstoffe, worin die Farbstoffe im wesentlichen als Kalium- oder Natrium-Kalium-Mischsalze vorliegen und die synthesebedingt einen relativ hohen Anteil anorganischer Salze enthalten, mittels eines Membrantrennverfahrens von den anorganischen Salzen weitgehend befreit und die Farbstoffsalze durch Zugabe von Natriumsalzen vor und/oder während des Membrantrennprozesses umsalzt, d.h., in die leichter löslichen Natriumsalze der Farbstoffe überführt.

Anschliessend werden diese Farbstofflösungen aufkonzentriert und man erhält, gegebenenfalls nach Zugabe üblicher Zusätze, die erfindungsgemässen Farbstoffzubereitungen.

Gegenstand der vorliegenden Erfindung ist daher ein Verfahren zur Herstellung konzentrierter wässriger Farbstoffzubereitungen von anionischen Farbstoffen, dadurch gekennzeichnet, dass man wässrige, anorganische Salze enthaltende Rohfarbstofflösungen oder -suspensionen, in denen die anionischen Farbstoffe z.B. als Kalium-, Natrium-Kalium- oder Ammonium-Kalium-Mischsalze vorliegen, mit Natriumsalzen von Mineralsäuren oder niederen organischen Carbonsäuren und gegebenenfalls weiteren üblichen Zusätzen versetzt und mittels eines Membrantrennverfahrens entsalzt und aufkonzentriert.

Weitere Gegenstände der vorliegenden Erfindung sind die nach dem erfindungsgemässen Verfahren erhaltenen konzentrierten wässrigen Farbstoffzugereitungen sowie deren Verwendung zum Färben und Bedrucken von natürlichen oder synthetischen, insbesondere textilen Fasermaterialien, ferner von Papier oder Leder.

Unter anorganischen Salzen (bzw. Elektrolyten) werden solche verstanden, welche von der Neutralisation und/oder dem Aussalzen des Farbstoffes aus der Synthese herrühren und in der Syntheselösung bzw. -suspension mitgeführt werden, wie Alkali- oder Erdalkalimetall-Salze, beispielsweise Magnesium-, Natrium- bzw. Kaliumchlorid, -sulfat oder -hydrogensulfat, vor allem Natrium- und Kaliumchlorid, ferner auch Ammoniumsalze.

Die anionischen Farbstoffe können in den Rohfarbstofflösungen oder -suspensionen, wie sie erfindungsgemäss eingesetzt werden, als Kalium-, als Natrium-Kalium- oder auch als Ammonium-Kalium-Mischsalze (Farbstoff-salze), vorliegen.

Als erfindungsgemäss verwendbare anionische Farbstoffe kommen organische Farbstoffe, beispielsweise saure (Colour Index (C.I.) acid and direct dyes), wie Metallkomplex-, Chromierungs-, Entwicklungs- und Beizenfarbstoffe, sowie vor allem anionische Reaktiv-farbstoffe in Frage. Es handelt sich insbesondere um sulfonsäure- bzw. carbonsäuregruppenhaltige, metallfreie oder metallhaltige und metallisierbare Mono-, Dis- und Polyazofarbstoffe, ferner Pyrazolon-, Thioxanthron-, Oxazin-, Stilben-, Formazan-, Anthrachinon-, Nitro-, Methin-, Triphenylmethan-, Xanthon-, Naphthazarin-, Styryl-, Azastyryl-, Naphthoperinon-, Chinophthalon- und Phthalocyaninfarbstoffe, sowie vorzugsweise um solche Farbstoffe, die mindestens einen faserreaktiven Rest im Farbstoffmolekül aufweisen.

Bei den gemäss vorliegendem Verfahren zu Farbstoffformulierungen verarbeiteten anionischen Farbstoffen handelt es sich um die Kalium- bzw. Natrium-Kalium- oder Ammonium-Kalium-Mischsalze von insbesondere sauren Wollfarbstoffen, Reaktivfarbstoffen oder substantiven Baumwoll- oder Papierfarbstoffen der Azo-, Anthrachinon- und Phthalocyaninreihe. Als Azofarbstoffe kommen z.B. metallhaltige oder metallfreie Mono- und Disazofarbstoffe sowie Formazanfarbstoffe, die eine oder mehrere Sulfonsäuregruppen enthalten, in Betracht. Als Anthrachinonfarbstoffe sind insbesondere 1-Amino-4-arylaminoanthrachinon-2-sulfonsäuren und als Phthalocyaninfarbstoffe besonders sulfierte Kupfer- oder Nickelphtalocyanine oder Phthalocyaninarylamide zu erwähnen.

Als Metallkomplexfarbstoffe kommen die angegebenen Salze von sulfonsäure- bzw. carbonsäuregruppenhaltigen Metallkomplexfarbstoffen, beispielsweise 1:1- oder 1:2-Metallkomplexe von Azo- oder Azomethinfarbstoffen oder metallisierte Phthalocyanine, insbesondere Kupfer- und Nickelphthalocyanine, in Betracht. Bei den 1:1 und 1:2-Metallkomplexen handelt es sich vorzugsweise um 1:1-Nickelkomplexe, 1:1-Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesondere o-Carboxy-o'-hydroxy-, o-Hydroxy-o'-amino- oder o,o'-Dihydroxyfarbstoffen des Benzo-azobenzol-, Naphthalin-azo-naphthalin-, Benzol-azo-naphthalin-, Benzol-azo-pyrazolon-, Benzol-azo-pyridon- oder Benzol-aco-acetessigsäureamid-Typs, wobei diese Gruppierungen unsubstituiert oder auch

substituiert sein können. Als Substituenten kommen z.B. in Betracht: gegebenenfalls substituierte Sulfonsäureamide oder Sulfone, Halogen oder Nitro.

Die Kupfer- und Nickelphthalocyanine leiten sich von den üblichen Gemischen vorschiedener Sulfonierungsgrade ab und enthalten vorzugsweise 2 bis 3 oder auch 4 sulfatierte Sulfonsäure-β- oder -γ-hydroxy-alkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Ethyl, Propyl, Butyl, oder niedere Hydroxyalkylgruppen, wie 2-Hydroxyethyl, 2-Hydroxypropyl, 3-Hydroxypropyl.

Als geeignete faserreaktive Gruppen enthalten die Reaktivfarbstoffe z.B. heterocyclische Gruppen oder eine Acylgruppe von einer Carbonsäure, wobei diese Gruppen mindestens ein unter Färbebedingungen abspaltbares Halogenatom aufweisen. Es handelt sich beispielsweise um die folgenden Gruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidring tragen, Dichlorchinoxylinyl-, oder 2-Chlorbenzthiazolylgruppen, oder die Acylreste halogenhaltiger aliphatischer Carbonsäuren oder ungesättigter Carbonsäuren, wie der Chloracetylrest oder der Acylrest der Acrylsäure, oder die Reste der β-Brompropionsäure und der α,β-Dibrompropionsäure. Die Reaktivfarbstoffe können z.B. 1 bis 4, vorzugsweise 1 oder 2 faserreaktive Gruppen enthalten, wobei diese gleich oder voneinander verschieden sein können.

Beispiele für Faserreaktivgruppen der Vinylsulfon-Reihe sind neben der Vinylsulfonylgruppe selbst aliphatische Sulfongruppen, die in β-Stellung zur Sulfongruppe eine alkalisch eliminierbare Gruppe, wie ein Halogenatom oder einen Esterrest einer Säure, enthalten, wie beispielsweise die β-Chloräthylsulfonyl-, β-Acetoxyäthylsulfonyl-, β-(3-Sulfobenzoyloxy)-äthylsulfonyl-, β-Sulfatoäthylsulfonyl-, β-Thiosulfatoäthylsulfonyl-, β-Phosphatoäthylsulfonyl-, β-Sulfatoäthylsulfonylmethylamino-, Vinylsulfonylmethylamino-, 4-Vinylsulfonylbutyryl-, 4-Chloräthylsulfonylbutyryl-, Vinylsulfonyläthoxyäthylamino- oder die 4-β-Sulfatoäthylsulfonylanilino-Gruppe.

Desweiteren kommen als faserreaktive Gruppen z.B. noch in Frage: Halogencyclobutan-, Mono- oder Bis-(γ-halogen-β-hydroxypropyl)-aminogruppen, β-Halogenethylsulfamidreste, β-Halogenethoxygruppen, β-Halogenethylmercaptogruppen, γ-Halogen-β-hydroxy-propylsulfamidreste oder 2,3-Epoxypropylgruppen.

Die Farbstoffe können gegebenenfalls auch in Mischungen miteinander oder gegebenenfalls mit Farbstoffen eines anderen Typs vorliegen.

Unter dem Begriff anionische Farbstoffe sollen im vorliegenden auch optische Aufheller verstanden werden und zwar in erster Linie Stilbenaufheller, vor allem solche vom Typ der Bistriazinylaminostilbendisulfonsäure, der Bis-styrylbiphenyle und -benzole und der Bis-triazoylstilben-disulfonsäuren. Dabei liegen die sulfogruppen- haltigen Aufheller in Form von Metallsalzen (z.B. Kaliumsalze, Kalium/Ammonium- oder Natrium/Kalium-Mischsalze) vor, wie sie bei der Synthese anfallen.

Bevorzugt werden mit Hilfe des erfindungsgemässen Verfahrens sulfogruppenhaltige Stilbenaufheller der Formel

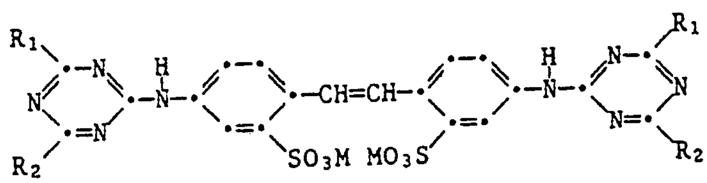

(1)

verarbeitet, worin M Kalium oder Natrium und Kalium ist, $R_1$ und $R_2$ unabhängig voneinander-$NH_2$, $-NHCH_3$, $-NHC_2H_5$, $-N(CH_3)_2$, $-N(C_2H_5)_2$, $-NHCH_2CH_2OH$, $-NHCH_2CH_2CH_2OH$, $-N(CH_2CH_2OH)_2$, $-N(CH_2CH_2CH_2OH)_2$, $-N(CH_3)(CH_2CH_2OH)$, $-NHCH_2CH_2OCH_2CH_2OH$, $-NHCH_2CH_2CH_2SO_3M$, $-OH$, $-OCH_3$, $-OCH(CH_3)_2$, $-OCH_2CH_2OCH_3$.

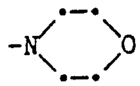 , $-SCH_3$ , 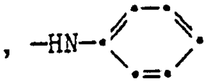 , $-N(CH_2CH(OH)-CH_3)_2$ , 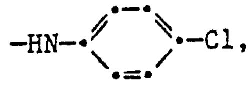 ,

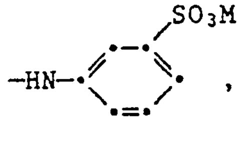 , 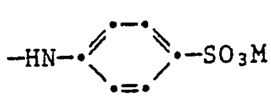 , 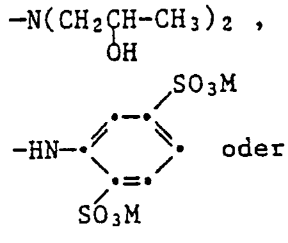 oder 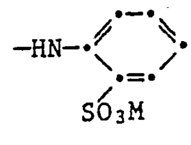

bedeuten, worin M die angegebene Bedeutung hat; oder der Formel

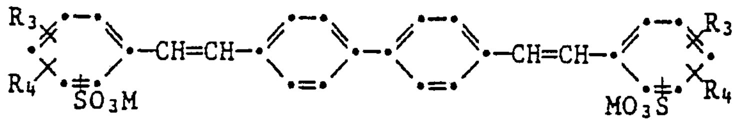 (2),

worin $R_3$ Wasserstoff, Alkyl mit 1 bis 4 Kohlenstoffatomen, Alkoxy mit 1 bis 4 Kohlenstoffatomen, Halogen, oder $SO_3M$, und $R_4$ Wasserstoff oder Alkyl mit 1 bis 4 Kohlenstoffatomen ist und M die angegebene Bedeutung hat;
ferner der Formel

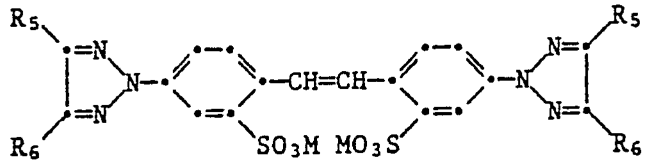 (3),

worin M die angegebene Bedeutung hat und $R_5$ und $R_6$ unahängig voneinander Wasserstoff,

$CH_3$, 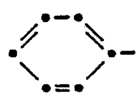, 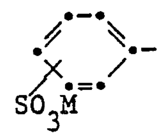,

oder $R_5$ und $R_6$ zusammen die Ergänzung zu einem Benzolring bedeuten.

Die Farbstoffe bzw. optischen Aufheller werden nach bekannten kontinuierlich oder diskontinuierlich arbeitenden Verfahren hergestellt und fallen am Ende der Synthese, je nach Verfahrensführung und Löslichkeitseigenschaften, im Forme einer Syntheselösung oder Synthesesuspension an.

Als Membrantrennverfahren sind für das erfindungsgemässe Verfahren
— die Dialyse über ein Konzentrationsgefälle an ionen-selektiven Membranen, oder
— die Elektrodialyse durch Anlegen einer elektrischen Spannung und unter Anwendung von Ionenaustauschermembranen als Diaphragma, und insbesondere
— die Ultrafiltration und
— die Umkehrosmose geeignet.

Ultrafiltration und Umkehrosmose werden in der Regel mit feinporigen Membranen mit Porendurchmessern von etwa 0,1 bis 1000 nm durchgeführt.

Die Porendurchmesser für Umkehrosmose (Hyperfiltration)-Membranen liegen im unteren Teil dieses Bereichs, also im wesentlichen im Bereich von 0,1 bis 50 nm, vorzugsweise, im Bereich von 0,1 bis 10 nm.

Die Ultrafiltration kann sowohl unter Druck, als auch durch Anlegen eines Vakuums betrieben werden. Ferner kann auf Seiten der Farbstofflösung unter Druck gearbeitet und permeatseitig gleichzeitig ein Vakuum angelegt werden. Gearbeitet wird allgemein mit einem Druck von 0,5 bis 10 bar oder einem Vakuum von 200 bis 20 mbar. Vorteilhaft kann man die Ultrafiltration durch Anlegen eines Vakuums durchführen, da ein Unterdruck permeatseitig einer Verstopfung der Membran entgegenwirkt und den Membranflux deutlich steigert.

Bei der Hyperfiltration handelt es sich um eine Molekulartrennmethode, die unter Verwendung semipermeabler Membranen mit einem Trennschnitt im Molekulargewichtsbereich von 300 bis 1.000, vorzugsweise 400 bis 800, durchgeführt wird. Derartige Membranen lassen Wasser und aufgelöste Stoffe, die aufgrund ihres Molekulargewichts unterhalb der Trenngrenze liegen, bei geringem bis mittlerem Druck durchtreten. Allgemein werden Drucke von 10 bis 100 bar und vorzugsweise 10 bis 40 bar und insbesondere 10 bis 30 bar verwendet.

Die im erfindungsgemässen Verfahren aufgrund ihrer guten, Trenneigenschaften bevorzugt verwendeten Membranen bestehen aus einem polymeren organischen Material, das gegebenenfalls an der Oberfläche durch saure oder basische Gruppen modifiziert sein kann.

Bei dem polymeren Membranmaterial handelt es sich um natürliche, halbsynthetische oder syntheitsche Materialien, die reaktionsfähige Gruppen, beispielsweise Hydroxy-, Amino- und/oder Amidoximgruppen enthalten können. Derartige Materialien können — sofern sie chemisch modifiziert werden sollen — mit geeigneten Reagenzien umgesetzt werden, die einerseits saure oder basische (ionische) Gruppen und anderseits mindestens eine unter Bildung einer chemischen (kovalenten) Bindung reaktionsfähige Gruppierung enthalten.

Bei den sauren Gruppen handelt es sich in erster Linie um Carboxyl- und Sulfongruppen und bei den basischen Gruppen um primäre, sekundäre oder tertiäre Aminogruppen, ferner Phosphonium- oder Sulfoniumgruppen.

Beispielsweise können folgende membranbildende Polymere zur Herstellung von Membranen verwendet werden:

— Celluloseacetate, z.B. solche mit niedrigem Acetylgruppengehalt, aber auch höher acylierte Cellulose, z.B. sogenanntes Zweieinhalbacetat, oder
— Polyvinylalkohole,
— Polyacrylnitril und Copolymere aus Acrylnitril und anderen ethylenisch ungesättigten Monomeren,
— Polysulfone,
— Polystyrole,
— Polyamide oder
— Polyimide.

Geeignete Gemische dieser Polymeren sind ebenfalls geeignet.

Vorzugsweise verwendet man solche Polymeren, die vor und/oder nach der Membranbildung wie angegeben chemisch modifiziert werden.

Als reaktive Reagenzien, die eine saure oder basische Gruppe enthalten, kommen farblose, z.B. Sulfonierungsreagenzien, wie Chlorsulfonsäure, und farbige Verbindungen in Betracht, vor allem saure Reaktivfarbstoffe, die verschiedenen Klassen angehören können, wie Anthrachinon-, Azo- und Formazanfarbstoffe. Sie können gegebenenfalls auch als Metallkomplexe vorliegen.

Besonders geeignet sind semipermeable Membranen mit Porendurchmessern von 0,1 bis 50 nm und einem Trennschnitt im Molekulargewichtsbereich von 300 bis 1000, vorzugsweise von 400 bis 800. Es handelt sich hierbei im wesentlichen um anionisch modifizierte Celluloseacetat-, Polyacrylnitril-, Polystyrol-, Polyvinylalkahol- und insbesondere Polysulfonmembranen. (Vgl. US—A—4 247 401, US—A—4 604 204, US—A—4 477 634, US—A—4 584 103, US—A—4 690 765, US—A—4 690 766, EP—A—82355).

Die erfindungsgemäss eingesetzten Rohfarbstofflösungen bzw. -suspensionen haben in der Regel einen Farbstoffgehalt von 5 bis 20 Gew.% und einem Salzgehalt von 0,05 bis 15 Gew.-%, insbesondere von 1 bis 5 Gew.-%. Sie können aus Farbstoffsynthesesuspensionen durch Verdünnen mit Wasser oder auch aus Farbstoffpresskuchen durch Anschlämmen mit deionisiertem Wasser oder verdünnten wässrigen Natriumhydroxidlösungen erhalten werden. Die Farbstoffpresskuchen erhält man beispielsweise durch Aussalzen von Farbstoffsyntheselösungen oder -suspensionen und Abtrennen/Abfiltrieren der Farbstoffe über z.B. Pressfilter. Unlösliche Anteile können durch Mikrofiltration abgetrennt werden. Die Entsalzung, Umsalzung und Aufkonzentrierung wird so lange durchgeführt, bis ein Farbstoffgehalt von 10 bis 50 Gew.-% erreicht ist. Der Salzgehalt (anorganische Salze) der so behandelten Farbstoffzubereitungen liegt im Bereich von etwa 0,05 bis 5 Gew.-%, wobei vorzugsweise ein Salzgehalt im Bereich von 0,1 bis 1 Gew.-% erreicht wird.

Die Rohfarbstofflösungen, die erfindungsgemäss eingesetzt werden, können Temperaturen im Bereich von 10 bis 80°C, vorzugsweise 20 bis 60°C aufweisen. In der Regel wird bei Raumtemperatur gearbeitet. Ihre pH-Werte können im Bereich von 4 bis 10, vorzugsweise 5 bis 9 liegen. Für den gesamten Temperatur- und pH-Wert-Bereich stehen geeignete Membranen zur Verfügung.

Als Natriumsalze kommen Natriumhalogenide, z.B. Natriumbromid und Natriumjodid, insbesondere aber Natriumchlorid in Betracht. Weitere anorganische Natriumsalze, die geeignet sind, Natriumcarbonate, -sulfate und -phosphate, wobei die sauren und die Neutralsalze genannt seien; ferner auch Polyphosphate, wie z.B. Natriumtripolyphosphat. Geeignete organische Natriumsalze sind solche von niederen organischen Carbonsäuren mit z.B. 1 bis 5 Kohlenbstoffatomen, wie z.B. Natriumformiat, Natriumacetat, Natriumlactat oder Natriumoxalat.

Vorzugsweise wird Natriumchlorid verwendet und zwar wird es vor oder während des Membrantrennverfahrens der Rohfarbstofflösung bzw. -emulsion in Mengen von 5 bis 200 Gew.-%, vorzugsweise 15 bis 70 Gew.-%, bezogen auf das Gewicht des Farbstoffs, zugesetzt. Die Salze werden in der Regel als wässrige Lösungen eingesetzt. Ueblicherweise wird soviel Natriumchlorid zugesetzt, dass ein stöchiometrischer Ueberschuss von Natriumionen, bezogen auf die Farbstoffanionen, vorliegt. Ganz besonders bevorzugt ist die Verfahrensweise, gemäss der man das Membrantrennverfahren stufenweise durchführt, d.h., die Rohfarbstofflösung wird mehrfach über die Membran geleitet, wobei ein steigender Entsalzungsgrad erreicht wird, und nach der ersten Stufe und gegebenenfalls auch nach weiteren Stufen Natriumchlorid zugesetzt wird. Salzmischungen können ebenfalls verwendet werden.

Zur Optimierung des Membrantrennverfahrens kann man den Rohfarbstofflösungen z.B. Lösungsvermittler wie Glykole oder Glykoläther, Caprolactam, Trimethyloläthan oder Pentaerylthrit, anionische oder nichtionische oberflächenaktive Verbindungen (Tenside) oder weitere übliche Zusatzmittel wie Harnstoff, Glucose oder Dextrin zusetzen. Das Verfahren ist so zu führen, dass diese Zusatzmittel während des Membrantrennverfahrens nicht vollständig wieder aus der Farbstofflösung entfernt werden. Gegebenenfalls können abgetrennte Teile nach den einzelnen Stufen des Membrantrennverfahrens wider zugesetzt werden. In der Regel werden diese Zusatzmittel in Mengen von 0,1 bis 30 Gew.-%, vorzugsweise von 1 bis 20 Gew.-%, bezogen auf das Gewicht des Farbstoffs eingesetzt.

Man kann so z.B. eine Erhöhung der Durchflussrate erreichen und vermeidet Membranverstopfungen, erreicht also insgesamt eine grössere Effektivität des Verfahrens.

Als erfindungsgemäss verwendbare oberflächenaktive Verbindungen kommen beispielsweise in Frage: Dispergatoren, Netz- oder Dispergiermittel anionischer, kationischer oder nichtionischer Natur, wie

Natriumdioctylsulfosuccinat, Dibutylnaphthalinsulfonat, Dodecylbenzolsulfonat, Laurylpyridiniumchlorid, Alkylphenylpolyglykoläther, Stearyl-diphenyl-oxyäthyldiäthylentriamin und Aethylenoxid-Additionsprodukte.

Bevorzugte anionische Tenside sind Kondensationsprodukt aromatischer Sulfonsäuren mit Formaldehyd wie Kondensationsprodukte aus Formaldehyd, Naphthalinsulfonsäure und Benzolsulfonsäure, oder Kondensationsprodukte aus Rohkresol, Formaldehyd und Naphthalinsulfonsäure, sowie vor allem Kondensationsprodukte aus Phenol-, Kresol- oder Naphthosulfonsäure und Formaldehyd oder Ligninsulfonate (Sulfit-Celluloseablauge) oder Oxyligninsulfonate, und insbesondere Kondensationsprodukte aus Naphthalinsulfonsäure und Formaldehyd, wobei diese vorzugsweise als Alkali- und/oder Ammoniumsalze vorliegen.

Als erfindungsgemäss verwendbare nichtionogene oberflächenaktive Verbindungen kommen vor allem in Betracht: Polyäthylenglykole mit einem Molekulargewicht von vorzugsweise 200 bis 1000; Mischpolymerisate aus Aethylenoxid und Propylenoxid (sog. Blockpolymerisate); Umsetzungsprodukte aus Fettsäuren mit 8 bis 22 Kohlenstoffatomen und Aminen oder Hydroxyalkylaminen; sowie Anlagerungsprodukte aus z.B. 5 bis 80 Mol, vorzugsweise 10 bis 30 Mol Alkylenoxiden, insbesondere von Aethylenoxid, wobei einzelne Aethylenoxideinheiten durch substituierte Epoxide, wie Styroloxid und/oder Propylenoxid, ersetzt sein können, und gesättigten oder ungesättigten Alkoholen Mercaptanen oder Aminen mit 8 bis 22 Kohlenstoffatomen oder Alkylphenolen oder Alkylthiophenolen deren Alkylrest mindestens 7 Kohlenstoffatome aufweisen, beispielsweise Fettalkoholpolyglykoläther.

Im Rahmen einer rationellen Arbeitsweise erweist es sich als besonders vorteilhaft, die Farbstoffsynthese und die anschliessende Membranbehandlung kontinuierlich durchzuführen.

Die erfindungsgemäss erhaltenen Farbstoffzubereitungen, die sich durch ihre hohe Konzentration an Farbstoff, ihre Homogenität und ihre gute Stabilität über einen Zeitraum von mehreren Monaten und in einem weiten Temperaturbereich (0°C—50°C) auszeichnen, können dann in flüssige und feste handelsfertige Farbstoffformulierungen übergeführt werden.

Zu Herstellung einer handelsfertigen Flüssigform ist die konzentrierte wässrige Farbstoffzubereitung gegebenenfalls nach Zugabe von den für Flüssigformulierungen üblichen Komponenten, wie schaumdämpfenden Mitteln, Gefrierschutzmitteln, Feuchthaltemitteln, Tensiden, Puffersubstanzen und/oder Antimikrobika und Einstellen des pH-Wertes, nur noch durch Verdünnen und/oder mit Hilfe von Coupagemitteln auf einen vorgegebenen Endfarbstoffgehalt zu bringen. Die Farbstoffzubereitung kann aber auch, gegebenenfalls nach Zugabe von Zusätzen, wie Bindemitteln, Entstäubungsmitteln, Netzmitteln, Puffersubstanzen und/oder Coupagemitteln, durch Wasserentzug, in ein festes Farbstoffpräparat übergeführt werden. Dank der erhöhten Farbstoffkonzentration benötigt man weniger Energie zum Trocknen. Man verwendet übliche Trocknungsverfahren, insbesondere die Sprühtrocknung.

Die genannten Hilfsmittel oder Zusatzmittel können der Farbstofflösung natürlich nicht zur vor deren endgültiger Formulierung zugesetzt, sondern wie erwähnt bereits vor oder während des Verfahrens in die Lösung des Rohfarbstoffs eingebracht werden und sind damit wenigstens teilweise bereits in der Farbstofflösung, aus der die endgültige handelsfertige Farbstoffzubereitung hergestellt wird, vorhanden (z.B. Lösungsvermittler, Lösungsmittel, Tenside etc.). Eine Zugabe während des Verfahrens ist selbstverständlich nur dann sinnvoll, wenn das oder die Hilfsmittel nicht durch eines der Membrantrennverfahren wieder vollständig aus der Lösung entfernt werden.

Verwendung finden die handelsfertigen Flüssigformulierungen bzw. die festen Farbstoffpräparate zur Herstellung von Färbebädern, Klotzflotten oder Druckpasten, die sich je nach Farbstoff zum Färben und Bedrucken von natürlichen, wie auch synthetischen Fasermaterialien, wie z.B. von Textilfasermaterialien aus Baumwolle, Wolle, Seide, Polyacrylnitril oder Polyamid oder auch von solchen Materialien aus Fasermischungen, wie z.B. aus Wolle/Polyamid, sowie ferner auch zum Färben und Bedrucken von Leder oder Papier eignen.

Die folgenden Beispiele dienen der Erläuterung der Erfindung; Teile bedeuten Gewichtsteile und Prozente Gewichtsprozente. Der Membran- flux ist angegeben in Liter Permeat pro $m^2$ Membranfläche und Tag ($l/m^2 \cdot d$).

Beispiel 1

1 kg Presskuchen eines in Kalium- und Natriumsalzform vorliegenden anionischen Farbstoffes der Formel

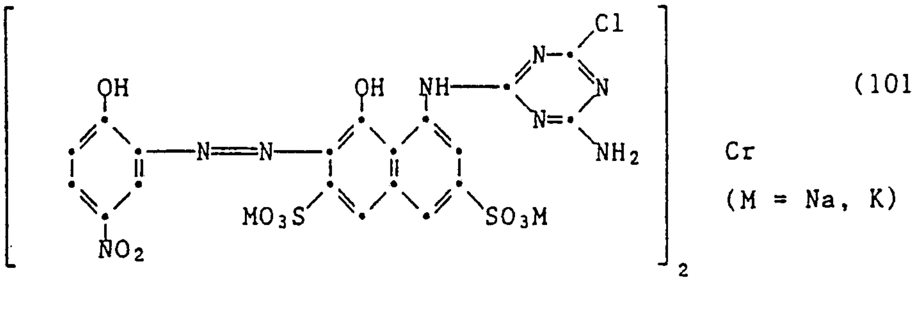

(101)

wird in 80 ml einer ln-Natriumhydroxidlösung und 7,5 l deionisiertem Wasser unter Rühren gelöst. Man erhält eine Farbstofflösung mit einem Trockengehalt von 7,4% (NaCl/KCl-Gehalt: 1,2%) und einem pH-Wert von 9.

Die Lösung wird auf einer Umkehrosmoseanlage (0,0655 $m^2$ Fläche), bestückt mit chemisch modifizierten Polyacrylnitrilmembranen, die eine Ausschlussgrenze von etwa 500 aufweisen (vgl. Beispiel 1 der US—A—4 584 103), mit 11 l deionisiertem Wasser diafiltriert bis der Salzgehalt der Farbstofflösung etwa 0,1% beträgt. Membrandurchfluss (Flux): 380 l/$m^2$·d. Dauer der Diafiltration: 28 h.

Dann gibt man 1 l 30 %ige wässrige Natriumchloridlösung, die zusätzlich noch 16 g eines Blockpolymeren aus Aethylenoxid und Propylenoxid enthält, zu der Farbstofflösung und diafiltriert die Farbstofflösung erneut mit weiteren 16 l deionisiertem Wasser. Der Salzgehalt der erhaltenen Farbstofflösung liegt unter 0,1%. Die Farbstofflösung wird dann auf einen Trockengehalt von 24% aufkonzentriert.

Diese konzentrierte Lösung kann in eine handelsfertige Formulierung übergeführt werden, indem man z.B. Puffersubstanzen, wie Natriumtripolyphosphat, zugibt und dann durch Zugabe von Wasser die Formulierung auf die gewünschte Konzentration einstellt.

In analoger Weise und unter Erzielung ebenfalls guter Ergebnisse kann man auch aus Presskuchen der mono-, di- oder tri-rekativen Farbstoffe der folgenden Formeln lagerstabile konzentrierte Farbstoffzubereitungen herstellen (M = Na, K):

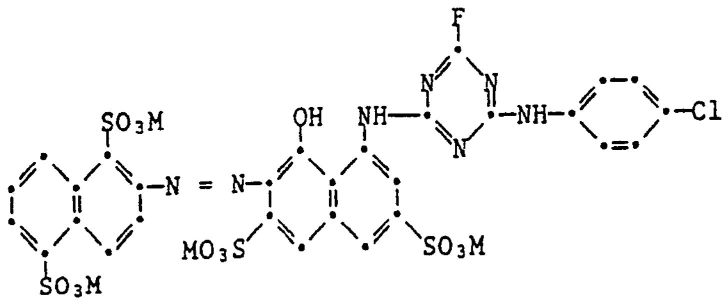

(102)

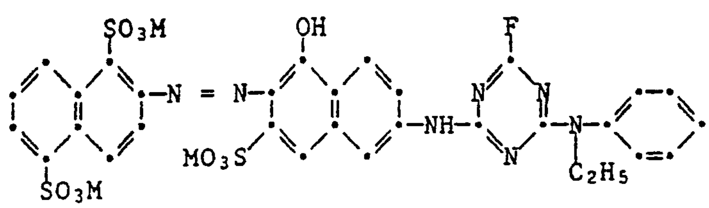

(103)

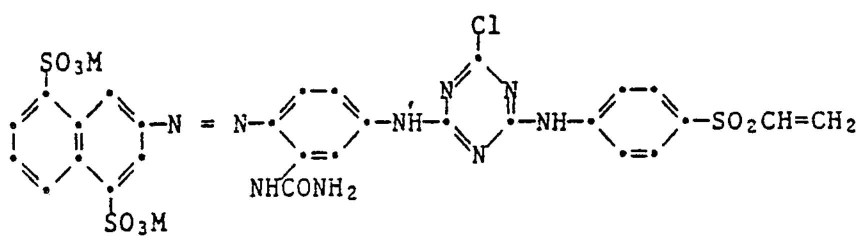

(104)

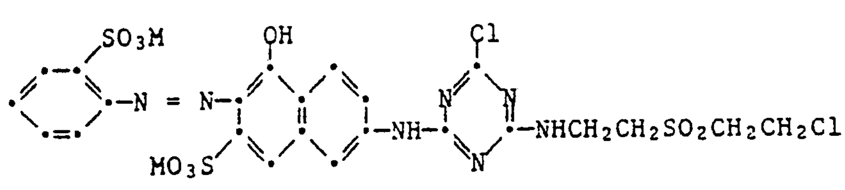

(105)

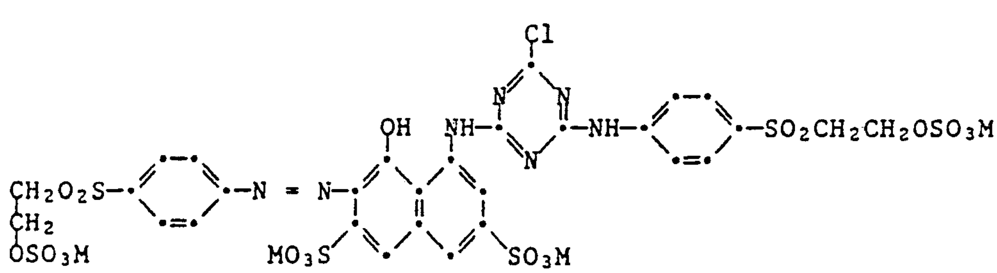

(106)

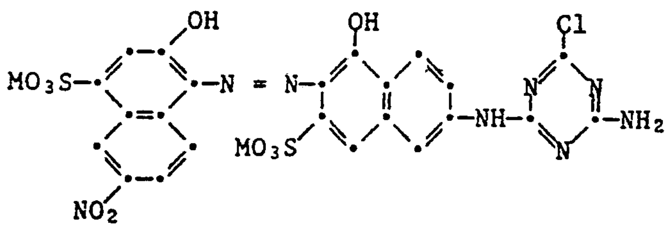

Mischung Cr/Co
Komplex 1:2 (107)

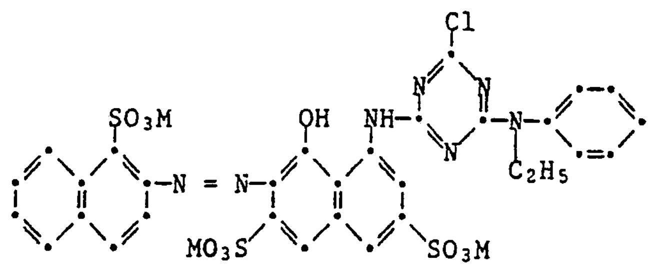

(108)

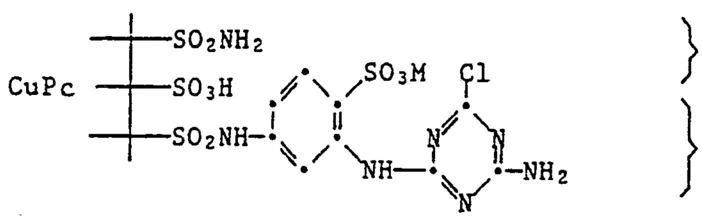

ca. 1,4

ca. 2,6 (109)

(CuPc = Kupferphthalocyanin)

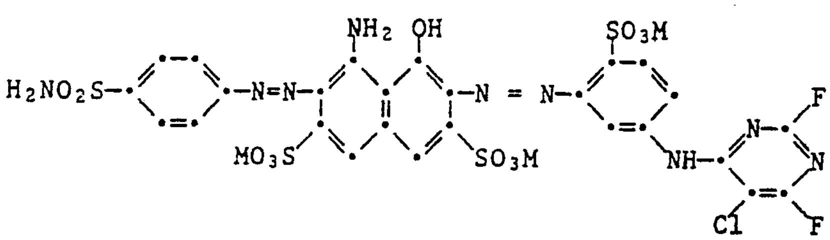

(110)

Beispiel 2

950 g Presskuchen eines in Kalium- und Natriumform (Verhältnis 1:1) vorliegenden asymmetrischen 1:2 Chromkomplex-Farbstoffes der Formel

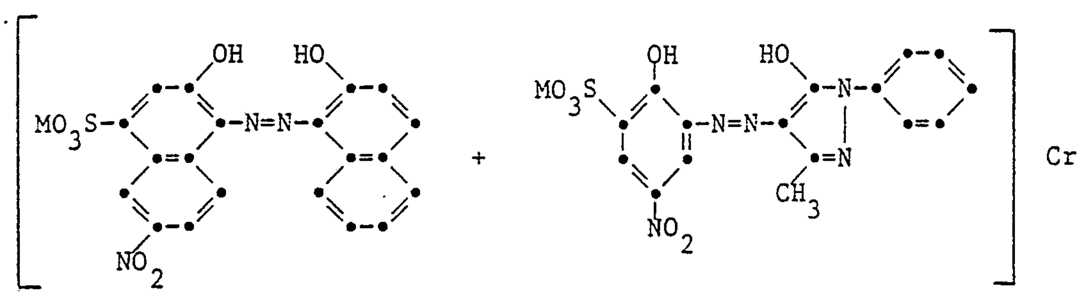

(111)

(M = Na, K)

werden in 7 l Wasser unter Rühren gelöst. Man erhält eine Lösung mit einem Trockengehalt von 7,0% und einem NaCl/KCl-Gehalt von 1,4%.

Auf einer Umkehrosmoseanlage gemäss Beispiel 1 wird bei einem Druck von 40 bar diese Lösung

zuerst mit 10,5 l Wasser bis zu einem Salzgehalt von etwa 0,1% diafiltriert. Der mittlere Membrandurchfluss beträgt 950 $l/m^2 \cdot d$. In der Folge gibt man 0,75 l 30%ige Natriumchloridlösung zu der Farbstofflösung und diafiltriert erneut mit weiteren 14 l Wasser bis zu einem Salzgehalt von unter 0,1% Durch anschliessende Aufkonzentrierung auf einen Trockengehalt von 25% (Na/K-Verhältnis 10:1) wird eine konzentrierte Lösung erhalten, die zur Herstellung einer handelsfertigen Farbstofflösung verwendet werden kann.

Beispiel 3

2 kg Presskuchen des in Kalium- und Natriumsalzform vorliegenden anionischen Farbstoffes der Formel

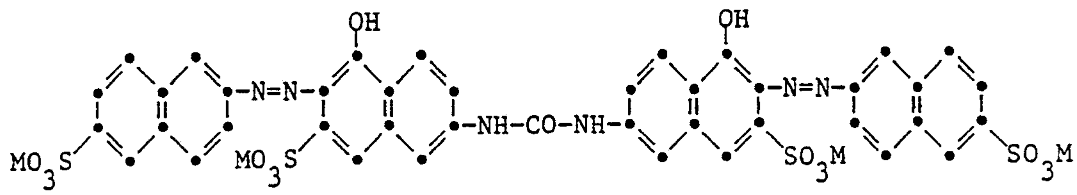

(112)

(M = Na, K)

wird in 15 l enthärtetem Wasser unter Rühren in Lösung gebracht. Nach Zugabe von 5 g Ethylendiamintetraessigsäure erhält man eine Farbstofflösung mit einem Trockengehalt von 6,5% (NaCl/KCl-Gehalt: 1,5%) und einem pH-Wert von 7,2.

Die Lösung wird auf einer Umkehrosmoseanlage von 0,125 $m^2$ Fläche, bestückt mit sulfonierten Polysulfonmembranen, mit 18 l enthärtetem Wasser diafiltriert bis der Salzgehalt etwa 0,2% beträgt. Anschliessend gibt man 2 l 30%ige Natriumchloridlösung zu und diafiltriert erneut mit weiteren 30 l enthärtetem Wasser. Nach Erreichen eines Salzgehalts von unter 0,1% wird die Farbstofflösung auf einen Trockengehalt von 29% aufkonzentriert und kann anschliessend zur Herstellung einer handelsfähigen Formulierung verwendet werden.

**Patentansprüche**

1. Verfahren zur Herstellung konzentrierter wässriger Farbstoffzubereitungen von anionischen Farbstoffen, dadurch gekennzeichnet, dass man wässrige, anorganische Salze enthaltende Rohfarbstofflösungen oder -suspensionen, in denen die anionischen Farbstoffe als Kalium-, Natrium-Kalium- oder Ammonium-Kalium-Mischsalze vorliegen, mit Natriumsalzen von Mineralsäuren oder niederen organischen Carbonsäuren und gegebenenfalls weiteren üblichen Zusätzen versetzt und mittels eines Membrantrennverfahrens entsalzt und aufkonzentriert.

2. Verfahren nach Anspruch 1, dadurch gekennzeichnet, dass man als Natriumsalze Natriumhalogenide, Natriumcarbonate, Natriumsulfate, Natriumphosphate oder Natriumsalze niederer organischer Carbonsäuren mit 1 bis 5 Kohlenstoffatomen verwendet.

3. Verfahren nach den Ansprüchen 1 oder 2, dadurch gekennzeichnet, dass man Natriumchlorid, vorzugsweise als wässrige Lösung, vor oder während des Membrantrennverfahrens der Farbstofflösung zusetzt.

4. Verfahren nach einem der Ansprüche 1 bis 3, dadurch gekennzeichnet, dass man 5 bis 200 Gew.-% des Natriumsalzes, bezogen auf das Gewicht des Farbstoffs der Lösung zusetzt.

5. Verfahren nach einem der Ansprüche 1 bis 4, dadurch gekennzeichnet, dass man das Membrantrennverfahren mehrstufig führt und nach der ersten Stufe sowie gegebenenfalls nach weiteren Stufen das Natriumsalz, insbesondere Natriumchlorid, zusetzt.

6. Verfahren nach Anspruch 1, dadurch gekennzeichnet, dass die Rohfarbstofflösungen aus Farbstoffsynthesesuspensionen durch Verdünnen mit Wasser oder die Rohfarbstoffsuspensionen durch Anschlämmen von Farbstoffpresskuchen mit deionisiertem Wasser oder wässriger Natriumhydroxidlösung erhalten werden.

7. Verfahren nach einem der Ansprüche 1 bis 6, dadurch gekennzeichnet, dass die Rohfarbstofflösungen oder -suspensionen einen pH-Wert im Bereich von 4 bis 10 aufweisen.

8. Verfahren nach einem der Ansprüche 1 bis 7, dadurch gekennzeichnet, dass die anionischen Farbstoffe Reaktivfarbstoffe sind.

**Revendications**

1. Procédé pour la préparation de compositions tinctoriales aqueuses concentrées de colorants anioniques, caractérisé en ce que l'on ajoute des sels de sodium d'acides minéraux ou d'acides organiques carboxyliques inférieurs, et éventuellement d'autres additifs usuels, à des solutions ou suspensions aqueuses de colorants bruts, contenant des sels minéraux, dans lesquelles les colorants anioniques se trouvent sous forme de sels de potassium ou de sels mixtes de sodium et de potassium ou d'ammonium et

de potassium, et on en élimine les sels au moyen d'un procédé de séparation sur membrane, puis on les concentre.

2. Procédé selon la revendication 1, caractérisé en ce que, en tant que sels de sodium, on utilise des halogénures de sodium, carbonates de sodium, sulfates de sodium, phosphates de sodium ou des sels de sodium d'acides organiques carboxyliques inférieurs ayant de 1 à 5 atomes de carbone.

3. Procédé selon la revendication 1 ou 2, caractérisé en ce que, avant ou pendant le processus de séparation sur membrane, on ajoute à la solution de colorant du chlorure de sodium, de préférence sous forme de solution aqueuse.

4. Procédé selon l'une des revendications 1 à 3, caractérisé en ce que l'on ajoute à la solution de 5 à 200 parties en poids du sel de sodium, par rapport au poids du colorant.

5. Procédé selon l'une des revendications 1 à 4, caractérisé en ce que l'on effectue le processus de séparation sur membrane en plusieurs étapes et on ajoute le sel de sodium, en particulier du chlorure de sodium, après la première étape ainsi qu'éventuellement après d'autres étapes.

6. Procédé selon la revendication 1, caractérisé en ce que l'on obtient les solutions de colorants bruts à partir de suspensions de synthese de colorants, par dilution avec de l'eau, ou les suspensions de colorants bruts par mise en suspension de tourteaux de filtration de colorants, dans de l'eau désionisée ou une solution aqueuse d'hydroxyde de sodium.

7. Procédé selon l'une des revendications 1 à 6, caractérisé en ce que les solutions ou suspensions de colorants bruts présentent un pH dans l'intervalle de 4 à 10.

8. Procédé selon l'une des revendications 1 à 7, caractérisé en ce que les colorants anioniques sont des colorants réactifs.

**Claims**

1. A process for the preparation of a concentrated aqueous dye formulation of an anionic dye, which comprises adding a sodium salt of a mineral acid or lower organic carboxylic acid and optionally other customary additives to an aqueous crude dye solution or suspension which contains inorganic salts and in which the anionic dye is present as the potassium, sodium/potassium or ammonium/potassium mixed salt, and desalinating and concentrating the solution or suspension by means of a membrane separation process.

2. A process according to claim 1, wherein a sodium halide, sodium carbonate, sodium sulfate, sodium phosphate or sodium salt of a lower organic carboxylic acid with 1 to 5 carbon atoms is used as the sodium salt.

3. A process according to either of claims 1 and 2, wherein sodium chloride, preferably as an aqueous solution, is added to the dye solution before or during the membrane separation process.

4. A process according to any one of claims 1 to 3, wherein 5 to 200% by weight of the sodium salt, based on the weight of the dye, is added to the solution.

5. A process according to any one of claims 1 to 4, wherein the membrane separation process is carried out in several stages and the sodium salt, in particular sodium chloride, is added after the first stage and optionally after further stages.

6. A process according to claim 1, wherein the crude dye solution is obtained by a dye synthesis suspension by dilution with water or the crude dye suspension is obtained by suspending a dye press-cake in deionized water or aqueous sodium hydroxide solution.

7. A process according to any one of claims 1 to 6, wherein the crude dye solution or suspension has a pH in the range from 4 to 10.

8. A process according to any one of claims 1 to 7, wherein the anionic dye is a reactive dye.